# EUROPEAN PATENT APPLICATION

(11) **EP 1 333 267 A1**
(43) Date of publication of application: **06.08.2003**
(21) Application number: 03250487.0
(22) Date of filing: 27.01.2003
(51) Int. Cl.: G01M 3/36, G01M 3/38

(54) **Method of leak detection**

(30) Priority: 25.01.2002 GB 0201713
(71) Applicant: Sepha Limited, Newtownards BT23 4QX (GB)
(72) Inventor: Parker, Andrew Ernest, Ballywhisken, Co Down, BT22 2LY (GB); Mahon, Stephen W., Ely, Cambridgeshire CB7 4PS (GB); Storkey, Matthew E M, Trumpting, Cambridge CB2 2JP (GB); Stewart, Neil, Cambridge CB3 9JG (GB)
(74) Representative: Earnshaw, Geoffrey Mark

(57) **Abstract**

There is described a method of detecting leaks in packages (10). The method preferably comprises the steps of:
(a) providing an apparatus (100; 600) including a test chamber (110), a vacuum pump (115) for at least partially evacuating the chamber (110), an illumination source (160) for illuminating a package (10) to be leak tested within the chamber, (110), a camera (120) for receiving an image of the package (10) and generating corresponding image signals, and a processor (170) for receiving and processing the image signals to determine whether or not one or more leaks are present in the package (10);
(b) optically monitoring a dimension of the package (10) at a first pressure in the chamber;
(c) applying a step change in pressure within the chamber from the first pressure to a second pressure whilst optically monitoring the dimension of the package (10);
(d) analysing changes in the dimension in response to the step change in pressure to determine whether or not one or more leaks are present in the package.
Preferably, the step change in pressure is a complex step comprising a plurality of pressure transitions. More preferably, the complex step comprises two pressure transitions.

## Description

The present invention relates to methods and apparatus of leak detection, particularly but not exclusively to methods and apparatus of leak detection for medicinal packaging.

In US 4, 593, 554, there is described a method and an apparatus for detecting a possible leak in a vacuum package. The vacuum package is received within a wrapping wall having a gas-tight, flexible wrapping foil adapted for adjustment to the contours of the vacuum package under the influence of overpressure, so that the vacuum package is tightly enveloped by the wrapping wall. Overpressure is applied to the wrapping foil such that this adjustment to the contours of the vacuum package is effected without sealing any leak present, ensuring that the pressure exterior of the vacuum package remains higher than the pressure within the package. Hermetic sealing from the outside air is effected in the residual space remaining between the vacuum package and the wrapping wall during a predetermined detection period, the pressure being gauged in function of the time. The apparatus and method are not suited to leak testing packaging which is partially gas filled, for example with a gas such as nitrogen.

In PCT/EP00/06390, there is described a chamber for the detection of leaks on foils. The chamber comprises two frames which are connected together. Foils to be tested are mounted on the two frames to define a test space between the foils. A seal is included between the frames and a bore hole in at least one of the two frames. The test space is coupled to a vacuum pump for evacuating the space. The chamber has an edge zone where a vacuum can be created independently of the test space. The chamber tests relatively larger areas of foil but is not appropriate for small foil-bound volumes as found in pharmaceutical packaging.

In EP0841551, there is described an apparatus and method for measuring leaks in gas-filled packaging. The force generated by a gas-filled package under test is measured in the apparatus when a surrounding space to the package is evacuated. The surrounding space is preferably a vacuum chamber containing the test package, the chamber arranged to be subjected to a vacuum step to achieve rapid application of vacuum to the test chamber. The rapid application of the vacuum to the vacuum chamber is achieved by the use of a pre-evacuated chamber, or extra large capacity vacuum pump arranged to be repeatedly connected abruptly to the test chamber via a controllable valve.

US 5082366 describes apparatus using interferometry to measure wall deformation in microchip packaging. However, interferometry requires expensive coherent light sources and detection equipment, including a two dimensional array sensor.

It is an object of the present invention to provide a much simpler method and apparatus for leak detection, and having great accuracy.

According to a first aspect of the present invention, there is provided a method capable of detecting a leak in one or more packages, the method comprising the steps of:
(a) applying at least a partial vacuum around the or each package to a first pressure;
(b) optically monitoring a dimension of the or each package at the first pressure;
(c) applying a step change in pressure from the first pressure to one or more second pressures whilst optically monitoring the dimension of the or each package;
(d) analysing the or each change in the dimension in response to the or each step change in pressure to determine the presence or absence of a leak in the or each package.

The invention is of advantage in that the method is capable of rapidly detecting pin-holes with diameters approaching a few micrometers.

The method is useable for any dimension change in the package. Generally the pressure change will create a deflection in at least one part of the package, preferably a relatively flat, flexible side thereof. At the or each reduced pressure, the dimension can be analysed to compare it with a normal or 'expected' dimension for a secure/sealed/safe package.

Preferably, the at least partial vacuum is provided within a test chamber, and the vacuum is provided by a pumping means connected to the test chamber.

The method could be used to detect one or more hole(s), both small holes and big holes, the latter more generally termed a 'gross leak'. A gross leak would result in no, or substantially little, change in the dimension of the package at reduced pressure. Thus, the invention can provide detection of all types of holes or leaks in a package.

The present invention could be used to analyse one or more packages simultaneously, as long as each package is monitorable. Such analyses could be in 'batches' or in parallel. The packages are generally static during the method of the present invention, although this may still be as part of a general conveying package arrangement.

The package may be a single entity, or involve a series of connected entities. This includes a single blister or pocket of a pharmaceutical blister pack, multiple blisters or pockets in one pack, or multiple packs being tested simultaneously or in parallel. The greater number of packages under test, the more time efficient is the invention.

The step change may be a single pressure change.

Preferably, the step change in pressure is a complex step comprising a plurality of pressure transitions. It has been surprisingly found that such a complex step is more sensitive, especially for pin-holes whose diameters are in the order of 10µm or even 5µm. One pressure useable is at or near a vacuum.

More preferably, the complex step comprises two pressure transitions.

Any increase in pressure from a reduced pressure position could be carried out through a pump means, or an atmospheric bleed valve of the like to provide rapid pressure increase and so increased speed of operation.

The optical monitoring is preferably carried out by unidimensional analysis using static illumination means and a linear sensor. This is a relatively simple type of optics, allowing use of simple equipment, as well allowing the use of a diffuse beam of light to scan all packages simultaneously.

Preferably, the optical monitoring is carried out using structured light in the provision of a single beam of light in the form of spot, line, array, strip, etc, which is scanned across the or each package, and the use of triangulation to analyse the progression of the spot, etc at each pressure stage. This provides parallel or batch analysis of a number of packages simultaneously, saving costs both in terms of simplicity of equipment and analysis time. Using linearity particularly avoids the need for dual beams for interferometry analysis, and the dual or multiple image analysis of electronic sheargraphy.

According to a second aspect of the present invention, there is provided an apparatus capable of for detecting a leak in one or more packages, the apparatus comprising:
(a) a test chamber to locate the or each package;
(b) pumping means for providing one or more reduced pressures in the chamber;
(c) illuminating means for illuminating the or each package;
(d) camera means for receiving a dimension of the package at the or each reduced pressure and generating a corresponding dimension signal or signals; and
(e) processing means for receiving and processing the or each dimension signal to determine the presence or absence of a leak in the or each package.

The illuminating means and/or camera means could be located within or without the test chamber.

Preferably, the illuminating means is arranged to generate diffuse illumination. The camera means could be arranged to view the package(s) at any suitable angle, including edge-on, to determine the dimension. The package could be viewed by the camera means in silhouette.

Preferably, the camera means is provided with optical magnifying means for magnifying in one viewing axis for enhancing measurement resolution when measuring the dimension. Such magnifying means enhances accuracy of the method.

Preferably, the illuminating means is arranged to generate one or more illumination spots, lines, stripes, etc on or across the or all of the packages, and the camera means and processing means are arranged to monitor spatial movements of the or each spot, etc to a provide a measure of the dimension.

Preferably, the dimension corresponds to one or more heights of the package(s) when viewed edge-on.

The dimension may only be a height or deflection dimension, which dimension is monitorable by using triangulation analysis.

It will be appreciated that features of the invention can be combined in any combination without departing form the scope of the invention.

The invention is applicable to analysing any suitable medical packaging. This includes pharmaceutical blister packs and the like containing tablets, capsules and similar products.

Embodiments of the invention will now be described, by way of example only, with reference to the following diagrams wherein:
- Figures 1a and 1b: are perspective and side illustrations of a pharmaceutical package susceptible to being leak tested according to the invention;
- Figure 2: is a schematic diagram of an apparatus for performing leak detection using a first method of the invention;
- Figure 3a to 3c: are schematic diagrams of the form of a compartment of the pharmaceutical package of Figure 1 subjected to environmental pressure changes in the apparatus of Figure 2;
- Figure 4: is an illustration of quantitative measurement points on the compartment of Figure 3;
- Figure 5: is an illustration of a single-step pressure profile which can be applied to the package of Figure 1 using the apparatus of Figure 2;
- Figure 6: is an illustration of normalized compartment height in response to the pressure profile of Figure 5;
- Figure 7: is an illustration of a two-step pressure profile which can be applied to the package of Figure 1 using the apparatus of Figure 2;
- Figure 8: is an illustration of normalized compartment height is response to the pressure profile of Figure 5;
- Figure 9: is a schematic diagram of an apparatus for inspecting surfaces as employed in a second method of the invention; and
- Figure 10: is a schematic diagram of an apparatus for performing leak detection according to a second method of the invention.

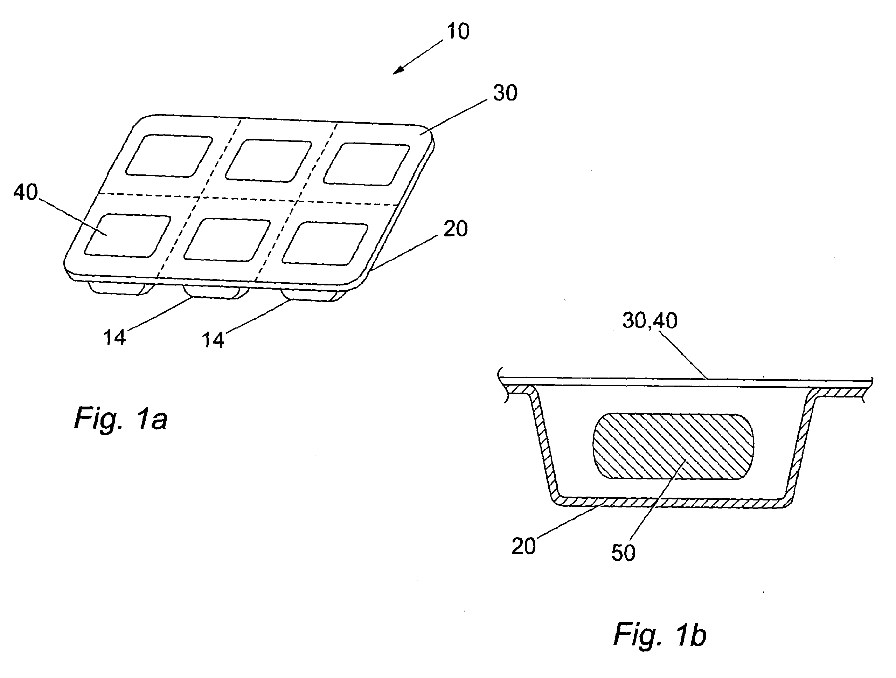

Referring to Figure 1, there is shown a pharmaceutical package; such as a blister pack, indicated generally by 10. The package 10 comprises a base 20 which is formed to provide therein six depressions or blisters 14. The package further comprises a top metallic foil layer 30 which is free-standing in regions 40 corresponding to the depressions, and bonded to the base at peripheral edges of the regions 40. Sealed into the depressions between the base 20 of the blisters 14 and foil layer 30 are six pharmaceutical tablets, for example a tablet 50. Each tablet is thereby housed in a corresponding compartment which is preferably filled with a relatively inert gas, for example with nitrogen, to assist to reduce tablet oxidation.

The base 20 is vacuum formed from a plastics material when the package 10 is a "Thermoform" type package; such packages are conventionally employed for medicinal compounds such as Aspirin. Alternatively, when the package 10 is a "Cold Form" type package, the base 20 is fabricated from dieformed aluminium film. In a further alternative where the package 10 is "Tropicalized", the base 20 comprises a combination of a first aluminium layer and a second plastics material layer.

The foil layer 40 is sufficiently robust to provide gaseous seals for the compartments, yet sufficiently fragile to be punctured by a user to access the tablets 50 through the foil layer 40. Moreover, the foil layer 30 is preferably in the order of 30 µm to 150 µm thick, more preferably 50 µm thick. However, pin-holes can arise in the foil 30 either through defects in foil manufacture or by way of damage during manufacture and subsequent product handling. Moreover, in "Cold Form" and "Tropicalized" packages, it is possible that pin-holes can also occur in the base 20. When such holes have diameters of, for example, less than 50 µm, it is difficult to detect the holes merely by way of visual inspection. Thus, the inventor has appreciated that a more appropriate method of detecting gas leakage through holes in metallic foils of pharmaceutical packages is desirable.

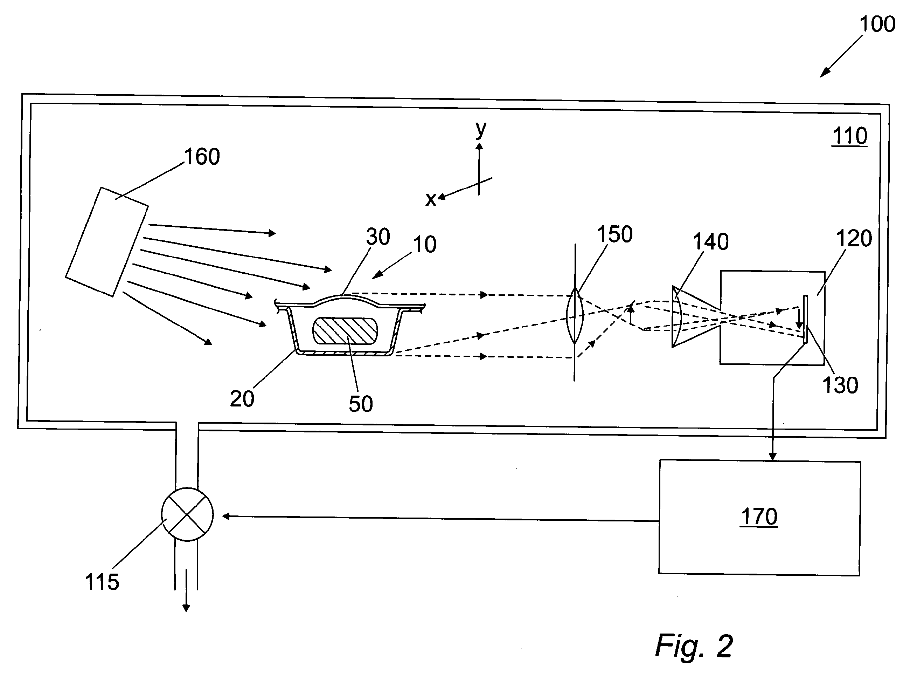

In Figure 2, there is shown a first apparatus according to the invention for detecting pin-holes in foil pharmaceutical packages; the first apparatus is indicated generally by 100. The apparatus 100 comprises a vacuum chamber 110 for accommodating the package 10 to be tested for leaks. The chamber 110 is provided with one or more access doors for accessing the package 10. Moreover, the chamber 110 is coupled by way of a pipe to an oil-filled rotary vacuum pump 115.

The chamber 110 further includes a solid state camera 120 comprising a charge coupled device (CCD) pixel image sensor array 130 and an optical lens assembly 140 for projecting images onto the array 130. If required, the image sensor array 130 can be substituted with an equivalent CMOS pixel array. Optionally, the chamber 110 further includes a cylindrical lens component 150 for increasing resolution in a vertical y-axis direction relative to a horizontal x-axis direction, the package 10 being orientated within the chamber 110 so that its foil layer 30 is substantially horizontal and parallel to the x-axis. The component 150 is preferably in the form of a cylindrical lens telescope exhibiting a similar focal plane for its two axes.

The chamber 110 further includes a diffuse light source 160 provided by incandescent bulbs, one or more cold cathode sources, or an array of high-brightness light emitting diodes (LEDs). The source 160 can be provided with a frosted optical scattering plate to ensure that radiation transmitted therethrough is diffuse to simultaneously cover all of package 10, i.e. all the blisters 14.

The apparatus 100 also includes a processor 170, for example a personal computer (PC), which is coupled to the camera 120 for receiving image data therefrom, and is additionally connected to the vacuum pump 115 for automatically controlling evacuation of the an interior region of the chamber 110.

If required, the apparatus 100 can further be provided with actuated doors controlled from the processor 170 and also provided with a handling system for automatically conveying packages into the chamber 110 for testing and removing tested packages therefrom.

Operation of the apparatus 100 will now be described in overview.

A user of the apparatus 100 opens one or more access doors of the chamber 110 and inserts the package 10 thereinto at atmospheric pressure, namely nominally 1000 mBar. The user then closes the one or more doors to seal the chamber 110. The source 160 is next energized to emit diffuse visible radiation, namely white light, towards the package 10. The rays cast a silhouette image of the package 10 through the cylindrical lens 150 and thereafter through the optical assembly 140 of the camera 150 to the array 130 thereof onto which a silhouette side-view image of the package 10 is projected. The array 130 generates a corresponding image signal which passes to the processor 170 where it is digitized and stored in memory of the processor 170. The processor 170 performs some computations to determine the height of the package 10 in regions of the compartments or blisters 14 thereof.

The processor 170 then activates the pump 115 to partially evacuate the chamber 110 in one or more pressure steps whilst continuous monitoring and recording the heights of the compartments of the package 10. Finally, the processor 170 deactivates the pump 115 and then allows the chamber 110 to return to atmospheric pressure so that the package can be removed through the aforesaid one or more doors.

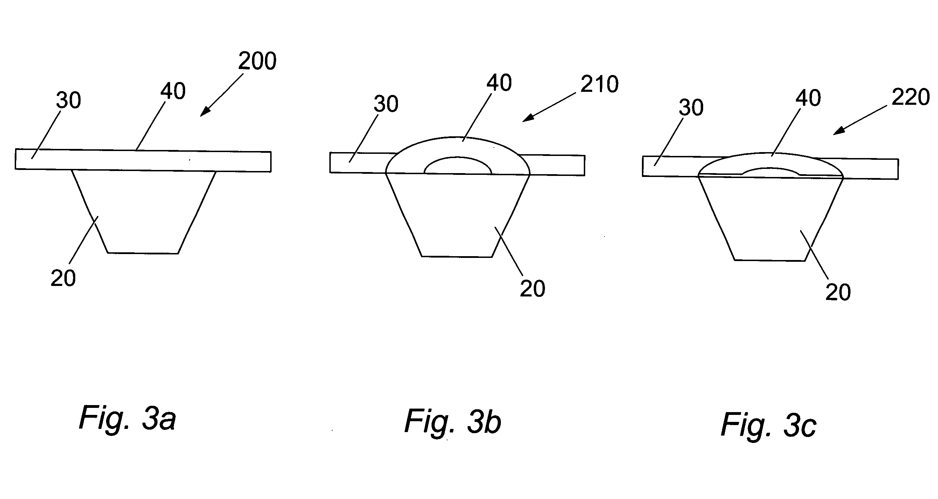

Referring now to Figure 3, there is shown an operating principle of the apparatus 100 and its associated method of leak detection.

A compartment of the package 10 at initial atmospheric pressure is indicated by 200. The foil layer 40 of the compartment 200 is substantially flat.

When the chamber 110 is evacuated to a reduced pressure of 700 mBar, an exterior surface of the foil layer 40 rises as illustrated, thereby increasing the height of the compartment 200 to provide a corresponding expanded compartment 210. At such a reduced chamber pressure, especially when the foil layer 40 is taught, gas from within the compartment 210 escapes through any pin-holes if present causing the compartment height to gradually decrease with time. As a rough approximation, the rate of height reduction of the compartment is proportional to the cumulative area of any pin-holes present. Thus, a 5 µm diameter pin-hole will cause a height reduction which is less than for a 50 µm diameter pin-hole.

When pin-holes are present, the compartment 210 becomes deflated as indicated by 220.

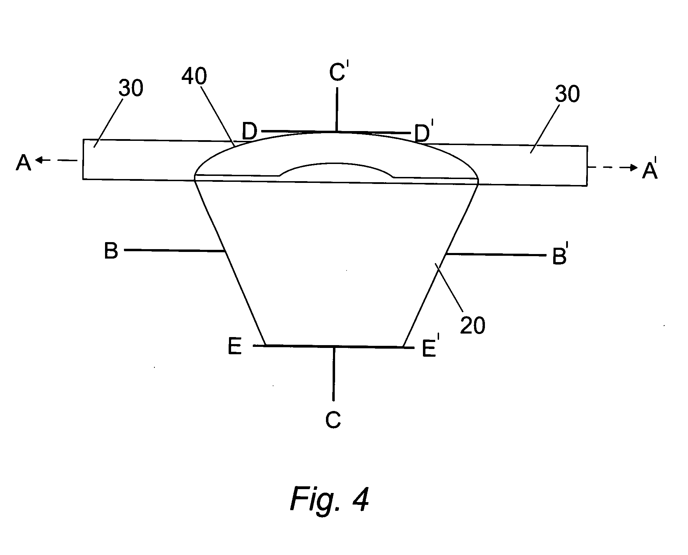

Referring to Figure 4, a silhouette image of a compartment of the package 10 is shown. The foil layer 30 is shown aligned along an axis A-A'. The camera 120 in conjunction with the processor 170 acquires the silhouette image and then aligns an axis B-B' to the foil layer 30 aligned along the A-A' axis. The processor 170 then applies an axis C-C' perpendicular to the B-B' axis to intersect the foil layer 40 at its greatest height as illustrated. Finally, the processor 170 applies axes D-D' and E-E' as illustrated to the C-C' axis to determine compartment height. A pixel translation difference between the axes D-D' and E-E' provides a measure of the height of the compartment. The camera 120 in combination with the processor 170 is capable of measuring changes of compartment height to a precision in the order of 0.5 to 1 µm.

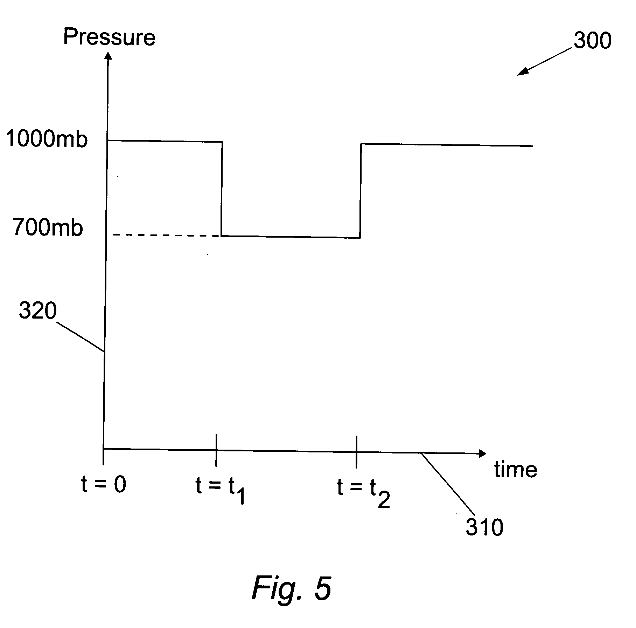

In Figure 5, there is shown a graph indicated by 300. The graph 300 provides a representation of temporal changes in pressure applied to the package 10 within the chamber 110 during testing of the package 10. The temporal changes correspond to a single step from atmospheric pressure, namely 1000 mBar, to reduced pressure, namely 700 mBar, and then back to atmospheric pressure.

The graph 300 comprises an abscissa axis 310 denoting time, and an ordinate axis 320 denoting pressure within the chamber 110. During the test, atmospheric pressure is maintained in the chamber 110 during a period t=0 to t=t₁, reduced pressure is maintained in the chamber 110 during a period t=t₁ to t=t₂, and atmospheric pressure is maintained in the chamber 110 after a time t=t₂.

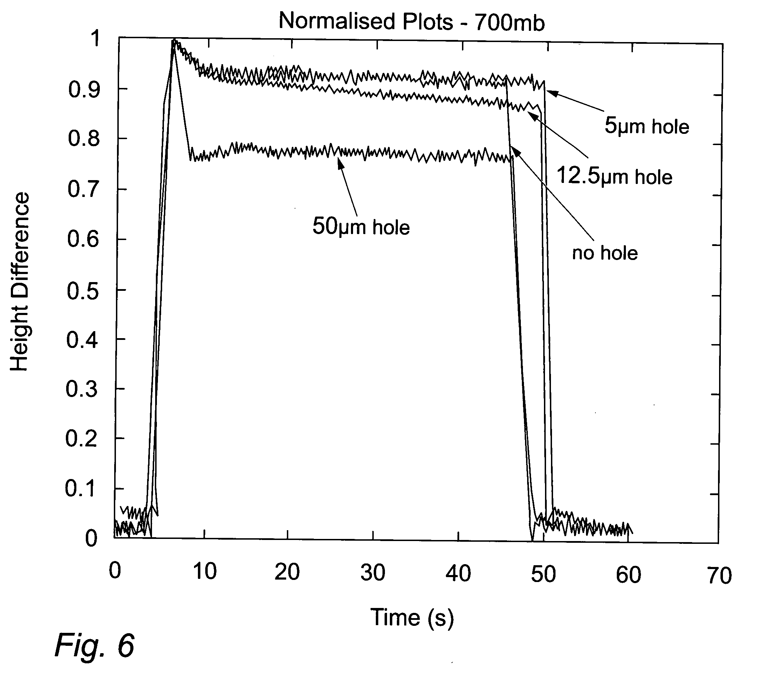

Referring next to Figure 6, there are shown compartment changes in height in response to the pressure step as illustrated in Figure 5. The step has a duration of substantially 45 seconds. It is to be observed in Figure 6 that compartment height reduces back after initial application of the pressure step; this is believed to be a relaxation effect of the foil layer 40 when initially stressed. Such relaxation is observed even if pin-holes are not present.

Due to pin-hole leakage through the foil layer 40, compartment height changes are greater for a 50 µm pin-hole relative to 12.5 µm pin-hole and no pin-hole. However, the compartment height changes for a 5 µm pin-hole and no pin-hole are virtually identical which indicates that the apparatus 100 interrogating the package 10 is capable of detecting 12.5 µm diameter pin-holes but not 5 µm diameter pin-holes. Moreover, it will be seen from Figure 6, that the pressure change step can be made shorter in duration, for example 25 seconds, whilst still enabling the apparatus 100 to detect reliably 12.5 µm diameter pin-holes.

In practice, a pressure step as illustrated in Figure 5 can sometimes detect 5 µm diameter pin-holes, for example especially in "tropicalized" packages. However, the step is not capable of detecting 5 µm diameter pin-holes in all circumstances as demonstrated by Figure 6.

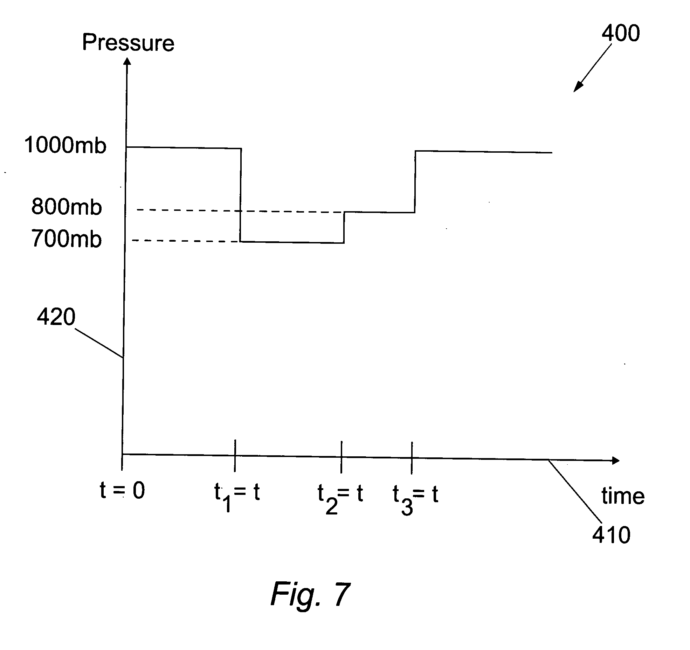

The apparatus 100 can be operated with more complex pressure steps to provide a sensing regime in which compartments with 5 µm diameter pin-holes can be distinguished from compartments devoid of pin-holes. In Figure 7, there is shown a graph indicated by 400 which illustrates such more complex pressure steps. The graph 400 comprises an abscissa axis 410 denoting time and an ordinate axis 420 denoting pressure within the chamber 110. The complex pressure step includes a change at a time t=t₁ from 1000 mBar to 700 mBar, a change at a time t=t₂ from 700 mBar to 800 mBar, and a change at a time t=t₃ from 800 mBar back to 1000 mBar.

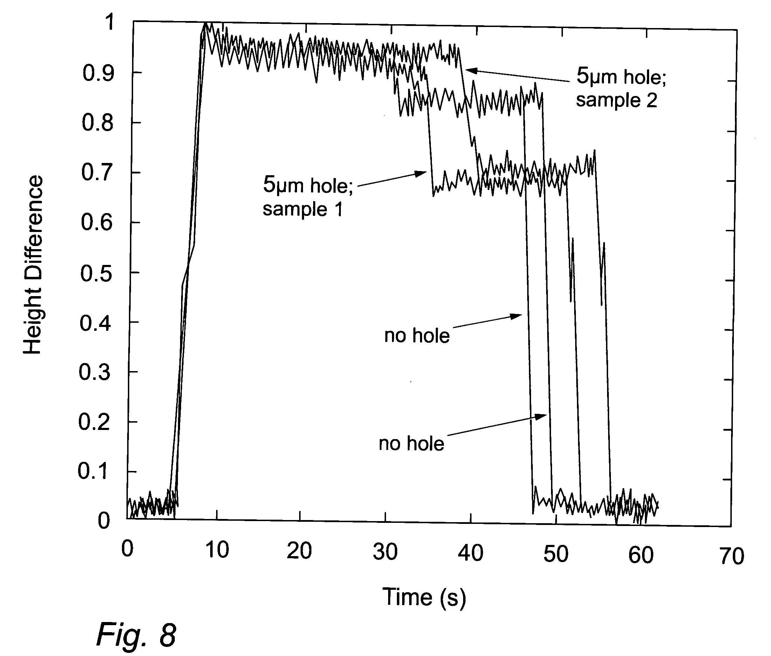

In Figure 8, there is shown compartment height change as measured using the apparatus 100 in response to the complex step. Compartments with 5 µm diameter pin-holes respond reproducibly differently to the complex step relative to compartments devoid of pin-holes. The complex step is also capable of readily detecting large pin-holes of diameters in excess of 5 µm diameter.

The apparatus 100 can provide simultaneous or parallel testing of all blisters 14 or compartments of the package 10. The camera 120 could be located at an angle to the plane of the package 10 to allow simultaneous or parallel monitoring of all the blisters 14 or compartments by linear sensing height differences.

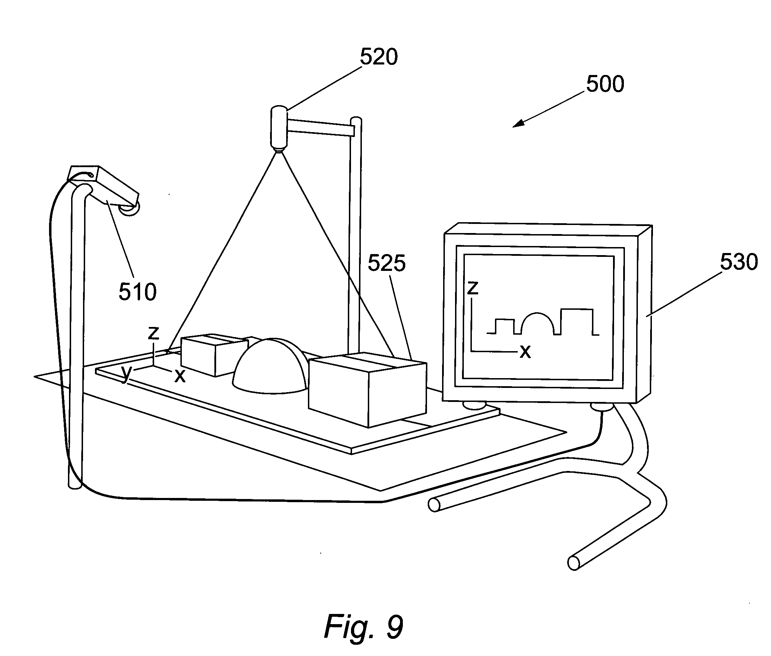

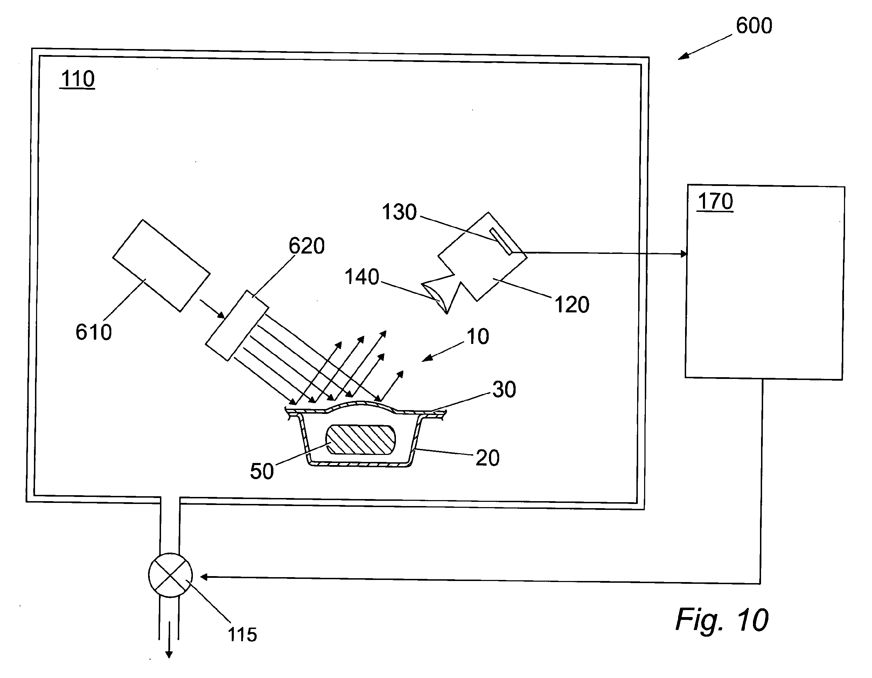

Figure 9 is an illustration of a simple apparatus indicated by 500 for demonstrating the principle of operation of a second apparatus according to the invention for detecting leaks; the second apparatus is illustrated in Figure 10 and indicated generally by 600.

Referring to Figure 9, the apparatus 500 comprises a CCD camera 510, a laser light source 520 for generating a line illumination 525 over objects to be interrogated, and a processing unit 530 including a visual display. Preferably, the apparatus 500 is operated under a darkened environment and/or the camera 510 is arranged to be responsive only to illuminating radiation emitted by the laser 520. In operation, the processing unit 530 displays a profile of where the line illumination intersects the objects is illustrated. Thus, the profile is indicative of heights of the objects. Such a principle of operation is employed in the apparatus 600 of Figure 10.

Referring now to Figure 10, the apparatus 600 comprises the chamber 110 including the camera 120, a laser illumination source 610 and an associated beam splitter 620. Moreover, the apparatus 600 further comprises the vacuum pump 115 and the processor 170. The processor 170 is coupled to the camera 120 to receive image signals therefrom, and is also connected to the pump 115 for providing automatic partial evacuation of the chamber 110. The chamber 110 includes a support (not shown) for receiving the package 10.

The laser 610 is preferably a solid-state laser operable to output red radiation at an output power in the order of 5 mW.

In operation, the package 10 is introduced into the chamber 110 at atmospheric pressure, namely substantially 1000 mBar, and the laser 610 is then energized to generate a single beam. The single beam propagates to the splitter 620 where it is divided for projecting one or more illumination stripes onto the package 10, especially over the foil layer 40 covering a compartment. Radiation of the stripes is reflected from the package 10 and received by the camera 120 which generates corresponding image signals which are passed to the processor 170. The processor 170 is programmed to digitize and then analyse the image signals to determine spatial positions of the stripes.

In a similar manner to operation of the apparatus 100, the apparatus 600 applies a pressure step to the package and measures change in height of the foil layer 40 in response to the step. If required, especially for detecting smaller pin-holes having diameters in the order of 10 µm or even 5 µm, the step can be a complex step, for example of a form as illustrated in Figure 7. The apparatus 600 is thus capable of generating measurement data of a type illustrated in Figures 6 and 8 and thereby capable of detecting pin-holes.

Although use of the apparatus 100, 600 for detecting leaks in the package 10 is described in the foregoing, the package 10 including six compartments, it will be appreciated that pharmaceutical packages having other numbers of compartments can also be tested, for example packages including only single compartments.

## Claims

1. A method capable of detecting a leak in one or more packages, the method comprising the steps of:
(a) applying at least a partial vacuum around the or each package to a first pressure;
(b) optically monitoring a dimension of the or each package at the first pressure;
(c) applying a step change in pressure from the first pressure to one or more second pressures whilst optically monitoring the dimension of the or each package;
(d) analysing the or each change in the dimension in response to the or each step change in pressure to determine the presence or absence of a leak in the or each package.

2. A method according to Claim 1, wherein the step change in pressure is a complex step comprising a plurality of pressure transitions.

3. A method according to Claim 2, wherein the complex step comprises two pressure transitions.

4. A method according to any one of the preceding claims, wherein the dimension corresponds to a height of the package.

5. A method as claimed in any one of Claims 1 to 4 for detecting a leak in a number of packages simultaneously.

6. A method as claimed in any one of the Claims 1 to 5 wherein the monitoring is carried out using structured light.

7. A method as claimed in Claim 6 wherein the light is provided by diffuse illumination.

8. A method as claimed in any one of Claims 1 to 7 wherein the package is a pharmaceutical blister pack.

9. An apparatus capable of for detecting a leak in one or more packages, the apparatus comprising:
(a) a test chamber to locate the or each package;
(b) pumping means for providing one or more reduced pressures in the chamber;
(c) illuminating means for illuminating the or each package;
(d) camera means for receiving a dimension of the or each package at the or each reduced pressure and generating a corresponding dimension signal or signals; and
(e) processing means for receiving and processing the or each dimension signal to determine the presence or absence of a leak in the or each package.

10. Apparatus according to Claim 9, wherein the illuminating means provides diffuse illumination.

11. Apparatus as claimed in Claim 9 or Claim 10 wherein the camera means is a linear array sensor.

12. Apparatus as claimed in any one of Claims 9 to 11 where camera means is arranged to view the package edge-on to determine the dimension.

13. Apparatus as claimed in any one of Claims 9 to 12 wherein the dimension is processed using triangulation.

14. Apparatus according to any one of Claims 9 to 13 wherein the camera means is provided with optical magnifying means for magnifying in one viewing axis for enhancing measurement resolution when measuring the dimension.

15. Apparatus according to any one of Claims 9 to 14 wherein the illuminating means provides one or more illumination stripes across the or each package, and the camera means and processing means are arranged to monitor spatial movements of the or each stripe to a provide a measure of the or each dimension.

16. Apparatus according to any one of Claims 9 to 15 for use with the method described in any one of Claims 1 to 8.
